# EUROPEAN PATENT APPLICATION

(11) **EP 2 849 135 A1**
(43) Date of publication of application: **18.03.2015**
(21) Application number: 14180758.6
(22) Date of filing: 13.08.2014
(51) Int. Cl.: G06Q 10/10, H04W 4/20, H04L 29/08

(54) **Communications device utilizing a central discovery mechanism, and respective method**

(30) Priority: 23.08.2013 EP 13306168
(71) Applicant: Thomson Licensing, 92130 Issy-les-Moulineaux (FR)
(72) Inventor: De Bus, Bruno, 9220 Hamme (BE); Voet, Jan, 2970 Schilde (BE)
(74) Representative: Arnold, Klaus-Peter

(57) **Abstract**

The communications device (1) comprises one or several participants (10-13) communicating with each other and with participants (21, 31) of other devices of a network via endpoints, wherein the communications device comprises a central discovery handler (14) storing discovery information of the participants (10-13, 21, 31) in a memory for providing a central discovery for the participants (10-13) of the network, and when the central discovery handler (14) detects a match between an endpoint of a first participant and an endpoint of a second participant, then the central discovery handler (14) informs the first and the second participant about the match.

## Description

### TECHNICAL FIELD

The invention relates to the field of communications devices, in particular to residential gateways arranged within a home network and adapted to operate via a broadband connection with a service provider network.

### BACKGROUND OF THE INVENTION

Residential gateways are widely used to connect devices in a home of a customer to the Internet or to any other wide area network (WAN). Residential gateways use for example digital subscriber line (DSL) technology that enables a high data rate transmission over copper lines, or use optical fiber broadband transmission systems, e.g. fiber-to-the-home (FTTH) or fiber-to-the premises (FTTP).

Home networks have become part of everyday life for many customers. A home network consists of a range of heterogeneous devices, which means that the home network is made up of different kinds of devices. All these devices need to communicate with each other. For this interconnection, multiple solutions are available. The home network uses a mixture of solutions, such as wireless and wired network connections. Combining these devices creates a network that allows users to share information and control devices in the home. Examples of networked devices in the home are for example residential gateways, set-top boxes, TVs, personal computers, tablet PCs, smart phones, network-attached storage (NAS) devices, printers and game consoles.

DDS (Data Distribution Service for Real-Time Systems) is a standard governed by the Object Management Group (OMG). It describes a data-centric publish-subscribe middleware that can be used to build distributed real-time systems. Since its formal adoption as an OMG standard in the year 2004 it has become a popular technology used in many different industries such as the airline/aviation industry, the automotive industry, the military.... Several commercial and open-source implementations of the DDS standard exist. To allow these different DDS implementations to interoperate, they must implement a second OMG standard, called the Real-Time Publish-Subscribe Wire Protocol - DDS Interoperability Wire Protocol (DDSI) Specification. DDSI specifies how DDS entities (Domains, Participants, Publishers, Subscribers, Readers, Writers, Topics, ...) are mapped to DDSI entities (domains, participants, endpoints and optionally topics), the format of the messages that are exchanged between the participants/endpoints, and also valid message sequences of message exchanges between participants/endpoints as well as a mechanism for discovering other participants and endpoints within a DDS domain. The latest version of DDS is currently the version v1.2 and the latest version of the Real-Time Publish-Subscribe Wire Protocol (DDSI) is the version v2.1, which are both published by the OMG on its Internet site under www.OMG.org.

For the purpose of interoperability, all DDSI implementations must implement the Simple Discovery Protocol (SDP). This protocol is divided into two sub-protocols:
1.) Simple Participant Discovery Protocol (SPDP): Using the SPDP protocol, all participants will announce their presence and their own contact information to all other participants in the same domain on a list of predefined/preconfigured addresses specific for the domain they are working in. Every participant must monitor these addresses and maintain internally a list of discovered participants along with their contact information inside a Local Discovery Data Store (LDDS).
2.) Simple Endpoint Discovery Protocol (SEDP): From the contact information received via SPDP it will derive the presence and contact information for a number of predefined "built-in" discovery endpoints. Next, each participant will publish the information of all the endpoints that exist within the participant over these built-in discovery endpoints. Furthermore, when the configuration of an endpoint changes, or when new endpoints are created, this info will also be published on the built-in discovery endpoints.

Participants will communicate with each other over endpoints. The application code of a participant will write data on endpoints that are marked as writer endpoints and DDSI will make sure this data can be read on a number of endpoints marked as readers. A reader endpoint will only receive the data from a certain writer endpoint if these endpoints are "matched". Two endpoints are said to match if
1. they are of the correct type (reader endpoints match with writer endpoints and vice versa),
2. they have the same name (the DDS topic name),
3. they work on the same type of data, and
4. they have compatible transport quality of service settings.

To be able to do this matching, each participant must keep an up-to-date list of all the endpoints of all the participants available in the system inside the LDDS. Finally, because the application code of a participant can dynamically create new endpoints within that participant, this information has to be kept available indefinitely, because newly created local endpoints might match with previously discovered endpoints.

The memory requirements for implementing the SDP protocol are acceptable when there are only a limited amount of DDS participants in the DDS domain or if there is plenty of memory available in the devices on which the DDS participants are running. However, when there are a lot of DDS participants with many endpoints, the situation quickly becomes problematic on low-memory devices. The amount of memory that is used on each device for SDP data is in practice: the number of participants times the total number of endpoints in the DDS domain times the memory needed to store each of the endpoints. This is regrettable because in many cases, a participant is often only interested in a small number of the discovered endpoints. Only the endpoints that match its own local endpoints are really needed for correct DDSI operation. For "small" participants that have only a few matching endpoints, having to store all the unused discovery data can be a real burden.

A naive approach to filter discovered information might be to just discard everything that is of no interest yet, but this simply doesn't work. The discovered endpoint/topic information might be needed afterwards. This can happen if the order of endpoint creation is different between a participant and its peers and the participant is a bit slower (intentionally or not) than its peers. A match would then not happen and communication would not be possible.

In fact, many DDS implementations targeted towards embedded devices will simply disable the SDP for these devices and use static (manually configured) discovery data to overcome the memory limitations. Although this can work with a limited amount of endpoints in a static configuration, overall it is cumbersome, very error-prone, and it does not allow for evolution of the system, unless all participants/devices in the system are changed or reconfigured to match the new system configuration.

The publication "A DDS Discovery Protocol based on Bloom Filters" by Javier Sánchez Monedero is a Master Thesis dated September 14, 2009, University of Granada, which describes advantages and disadvantages of several discovery mechanisms for DDS.

Universal Plug and Play (UPnP) uses a network protocol based on the Internet Protocol, a Simple Service Discovery Protocol (SSDP), for advertisement and discovery of network services and presence information of UPnP network devices. When a device is added to a UPnP network, the discovery protocol allows that device to advertise its services to control points on the network. Therefore a discovery message is used containing a few, essential specifics about the device or one of its services, e.g. its type, identifier, and a pointer to more detailed information.

US 20120166556 discloses a method and a device for real-time publish subscribe (RTPS) discovery based on a distributed hash table (DHT). The participants are registered by a participant peer in a distributed hash table (DHT) of an overlay network, location information on relative participants to be discovered is obtained, and information on entities of the relative participants is shared by exchanging a discovery message with the relative participant peer based on the location information on the obtained relative participants.

KR 101157041 discloses a DDS monitoring method to reduce communication traffic by extending SPDP (Simple Participant Discovery Protocol) message generation periods. An agent unit establishes a QoS (Quality of Service) profile of DDS applications in order to control a communication domain. The agent unit manages the DDS applications installed in each node and transmits monitoring information generated from the DDS applications to a manager unit through a DDS library unit by collecting the monitoring information.

### SUMMARY OF THE INVENTION

The communications device comprises one or several participants communicating with each other and with participants of other devices of a network via endpoints, wherein the communications device comprises a central discovery handler storing discovery information of the participants, as provided for example by respective discovery messages, for providing a central discovery for the participants of the network. When the central discovery handler detects a match between an endpoint of a first participant and an endpoint of a second participant, then the central discovery handler (14) informs the first and the second participant about the match. The central discovery handler acts advantageously as a hidden participant responding only to discovery data of the participants, but not to messages related to topics distributed within the network.

In a preferred embodiment, the central discovery handler matches the discovery information of the discovered endpoints of participants designed for a central discovery within a domain in accordance with a Data Distribution Service for Real-Time Systems (DDS). The central discovery handler is in particular adapted to send out endpoint information of one of the participants in response to discovery information of a new endpoint of any participant, and the central discovery handler is further adapted to send out matched endpoint information for newly defined participants in the domain that are configured to use the central discovery mechanism. Also, the central discovery handler stores the received discovery information of the participants, and when a match between any endpoints of the participants is detected, the corresponding discovery information is sent to the respective participants.

In a further aspect of the invention, the central discovery handler is designed as a part of a device-specific middleware of the communications device, and the device-specific middleware operates in accordance with the Data Distribution Service for Real-Time Systems (DDS). The communications device is in a preferred embodiment a CPE device, e.g. a residential gateway, arranged within a home network.

The method providing a discovery within a network, e.g. a DDS domain, comprising a multitude of participants communicating with each other, comprises the steps of storing discovery information for the participants centrally in a central discovery handler, wherein, when the central discovery handler detects a match between an endpoint of a first participant and an endpoint of a second participant, the central discovery handler informs the first and the second participant about the match. In particular, each time the central discovery handler receives discovery information, the discovery information is stored and when a match between endpoints of participants is detected, the respective discovery information is sent to the participants operating these endpoints.

In a further aspect of the invention, the participants store only discovery information about an endpoint of another participant, when there is a match with one of its own endpoints, and discovery information of endpoints which do not match with one of its endpoints are dropped by the participants.

In a preferred embodiment, the method comprises the steps of: when the first participant creates an endpoint, the first participant sends a discovery message with discovery information of the endpoint to the other participants and the central discovery handler of the network; and when the central discovery handler detects a match between the endpoint of the first participant and an endpoint of a second participant, then the central discovery handler informs the first and the second participants about the match, so that the first participant recognizes that his endpoint matches with the endpoint of the second participant and a communication between the endpoints of the first and second participants can be started.

### BRIEF DESCRIPTION OF THE DRAWINGS

Preferred embodiments of the invention are explained in more detail below by way of example with reference to schematic drawings, which show:
- Fig. 1: a home network including a residential gateway comprising a central discovery handler, and
- Fig. 2: a flow chart illustrating a discovery process within a DDS domain comprising two participants and a central discovery handler.

### DETAILED DESCRIPTION OF PREFERRED EMBODIMENTS

In the following description, a communications device comprising a central discovery handler is described. The communications device is in a preferred embodiment a CPE device adapted for connecting a home network with a service provider network via a broadband connection. For purposes of explanation, numerous specific details are set forth in order to provide a thorough understanding of the embodiments. It will be evident, however, to one skilled in the art that the present invention may be practiced without these specific details.

The CPE device is for example a residential gateway, a router, a switch or a set-top box, and includes a microcontroller, a non-volatile memory, in which an operating system and applications are stored, and a volatile memory for the operation of the CPE device. The operating system of the CPE device is for example a LINUX operating system and a CPE device-specific middleware, which represents a device execution environment. The device execution environment includes software components for providing for example a DSL modem function, gateway and switching functions, FXS functions, VoIP functionality and Wi-Fi operation.

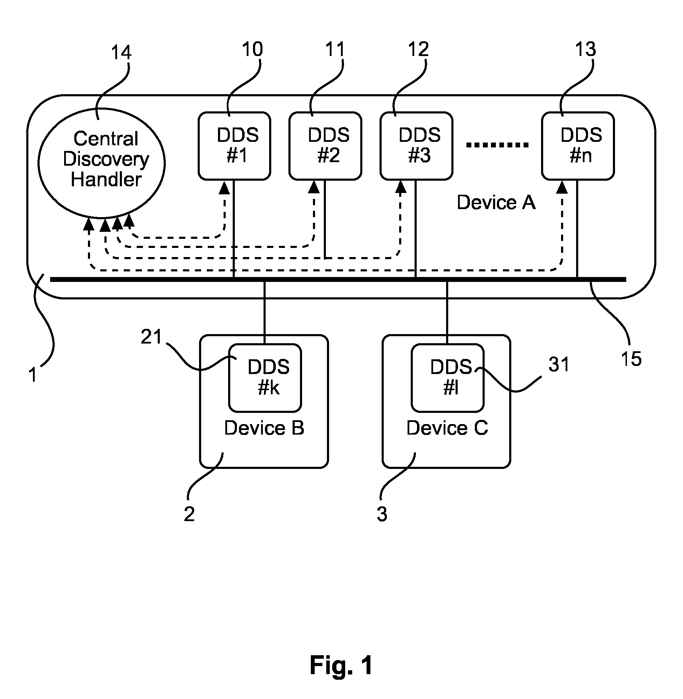

Figure 1 depicts schematically a home network including a CPE device 1, e.g. a residential gateway, and end user devices, e.g. a set-top box 2 and a personal computer 3. The CPE device 1 includes a multitude of participants 10-13 which are coupled within the CPE device 1 via a communication bus 15. The set-top box 2 and the personal computer 3, which include participants 21, respectively 31, are connected with the CPE device 1 and via the communication bus 15 of the CPE-device 1 with the other participants 10-13.

The participants 10-13, 21 and 31 communicate with each other over endpoints by using a publish/subscribe messaging, for example by utilizing DDS (Data Distribution Service for Real-Time Systems). For a discovery of the participants 10-13, 21 and 31 and the respective endpoints, a central discovery handler (CDD) 14 is included in the CPE device 1. The CDD 14 stores discovery messages including a discovery information or discovery data for the participants 10-13, 21 and 31 of the home network and for respective endpoints in a memory of the CPE device 1. The CDD 14 also matches locally all discovered endpoints within the CPE device 1 and within the home network, therefore providing a central discovery for the participants 10-13, 21, 31 of the network. The discovery information can be understood as metadata being different with regard to data related to a topic. The discovery information includes in particular presence and contact information about the participants and the endpoints of the home network, and includes for example information about the type or any identifier of participants and/or endpoints. In a preferred embodiment, for a discovery of the participants, the Simple Participant Discovery Protocol (SPDP) is used and for the endpoints, the Simple Endpoint Discovery Protocol (SEDP).

When the CDD 14 detects a situation where a new match occurs on one of the endpoints of the participants 10-13, 21 and 31, the CDD 14 will send the relevant discovery data of a new type of build-in endpoint to the respective participants 10-13, 21 and/or 31, which are configured to use central discovery. Because the CDD 14 will send, respectively resend, the discovery information of all matched endpoints within the CPE-device 1 and/or the devices 2, 3 to the participants 10-13, 21 and 31, which need the information, the participants 10-13, 21, 31 themselves no longer need to store discovery data for endpoints, for which they do not have a matching local endpoint. This results in a significant memory reduction.

When designing the CPE device 1, a choice is made to let some participants, participants 10-13, operate with a modified central discovery protocol by using the CDD 14 to reduce the memory consumption of the CPE device 1. To implement this modification, the DDS/DDSI implementation of the participants 10-13 is modified to support central discovery. It is to be noted that not all participants within the CPE-device 1 necessarily use central discovery, because it might not be possible to change the DDS/DDSI implementation of all participants of the CPE-device 1, and in some situations, it may be better to let some participants not use central discovery for speed reasons, or because they are interested in most of the endpoints of the devices of the home network. It is further possible to use several DDS/DDSI implementations within the same CPE device 1.

For the operation of the CPE device 1, the CDD 14 has to be started before the participants 10-13, 21 and 31 using central discovery can be started. The CDD 14 itself is also a participant, and as such it will be visible to the internal participants 10-13 and also to the external participants 21, 31 of the devices 2, 3 of the home network. The CDD 14 will never announce endpoints itself, but since it is visible to the external world as an extra participant, it can catch all discovery data coming from the participants 10-13 of the CPE-device 1 as well as from the participants 21, 31 of the other devices 2, 3. The CDD 14 will store all this information in its local discovery data store (LDDS) just like every participant would normally do if no central discovery is used.

The CDD 14 has extra central discovery build-in endpoints which are used to retransmit missed discovery data to the participants 10-13, 21 and 31, when needed. These endpoints are invisible to external devices and participants, since like build-in discovery endpoints, they are not published, and they are very similar to the endpoints as used by the simple endpoint discovery protocol (SEDP) and the simple participant discovery protocol (SPDP).

When one of the participants 10-13, 21, 31 receives endpoint discovery data over its normal build-in discovery endpoints, it will try to match the received endpoint data with its local endpoints: If a match results, this information will be stored in its local data store, which can be similar to the local discovery data store (LDDS) as used by the simple participant discovery protocol. However, if no match occurs, then the endpoint information is simply discarded. This is in contrast to the situation without central discovery, where each participant needs to keep this information. This is where the memory reduction originates from.

If one of the participants of the devices 1-3 publishes new, not yet received endpoint data, the CDD 14 will detect this and perform an additional action, e.g. its local data store will be checked for new matches with existing endpoints of the participants 10-13, 21, 31, and when a new match is found, the matching endpoint information from the local data store will be republished on one of the endpoints of the CDD 14 for the respective participants.

The participants 10-13, 21, 31 monitor the discovery endpoints of each other just like they monitor the normal discovery build in endpoints of participants not using central discovery. When data is received on one of their discovery endpoints, they will try to match the received endpoint data with their local endpoints, just like in the normal discovery application. Matches will be stored in its local discovery data store, and data that do not match will be discarded.

The described mechanism assures that all endpoint discovery information that is of interest for the respective participants arrives in all of the participants 10-13, 21, 31, while maintaining backward compatibility for participants which do not use central discovery. The information that is not of interest to the participants 10-13, 21, 31 will not be kept within these participants.

The participants configured to use central discovery therefore need significantly less memory, if they are only interested in a subset of the available endpoints within the home network. Further, participants who are not configured to use central discovery, or participants who are unaware of the central discovery mechanism, like participants that use a DDS/DDSI implementation from another vendor, will still work on a home network, which utilizes a CDD 14 and/or participants using central discovery.

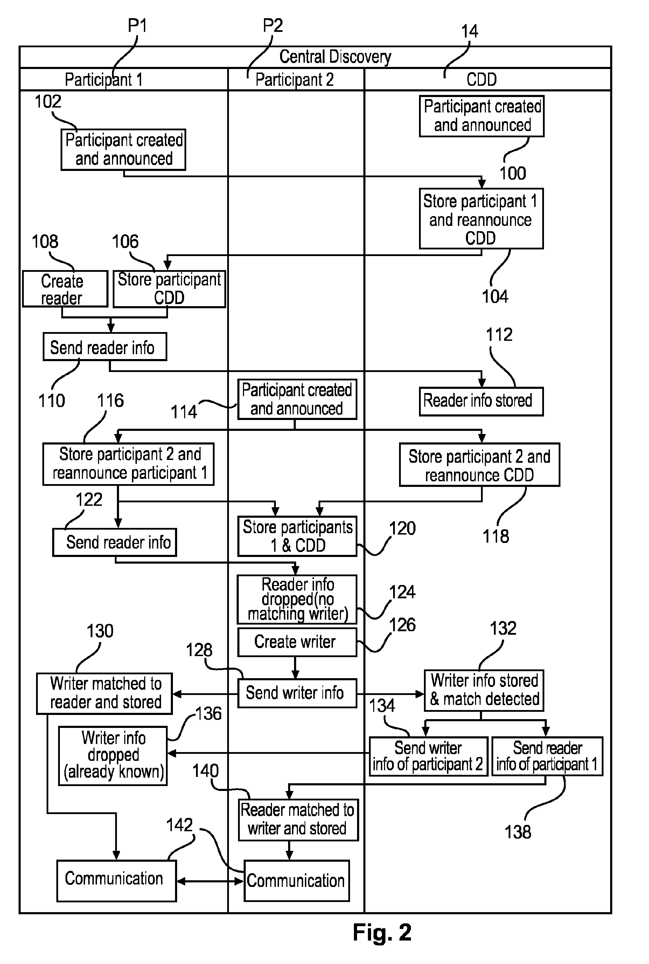

An embodiment for a discovery process within a network, for example a DDS domain, the network comprising two participants P1, P2 and a central discovery handler, e.g. CDD 14, is described with regard to figure 2. When the network starts to operate, the CDD 14 creates a participant and announces its presence, step 100. In a further step 102, the participant P1 is created within the network, and its presence is announced. A discovery message including the metadata of participant P1, the discovery data, is received by the CDD 14, which stores the discovery data of participant P1 and re-announces its presence again, step 104. A message with the discovery data of the CDD 14 is received by the participant P1, which stores the discovery data of the CDD 14, step 106. The participants within the domain may already have specified ID addresses used for sending of the messages, or may use a default unicast address or a multicast address to announce the presence of a participant within the domain.

In a further step 108, the participant P1 announces a reader information, to indicate that the participant P1 will include an endpoint operating as a reader for a specific topic, and in step 110, the participant P1 sends a message to the CDD 14 including the reader information. The reader information from participant P1 is stored by the CDD 14 in the memory of the CPE device 1 in a further step 112. Then, participant P2 is created within the domain, which announces its presence by sending discovery messages to the participant P1 and the CDD 14, step 114. In step 116, the participant P1 stores the discovery data of participant P2 and re-announces its presence to participant P2, and in step 118, the CDD 14 stores the discovery data of the participant P2 and re-announces its presence to the participant P2. In step 120, the participant P2 stores the discovery data of the participant P1 and of the CDD 14. In a further step 122, the participant P1 announces again the reader information. The reader information is send to participant P2, which drops this information, because participant P2 has no matching writer, step 124.

In a further step 126, the participant P2 creates a writer endpoint, and in step 128, the participant P2 sends discovery messages with the respective writer information to the participant P1 and the CDD 14. The participant P1 receives the discovery data of the writer of the participant P2, recognizes that the writer matches with its reader, and stores the respective discovery data, step 130. The CDD 14 stores also the discovery data of the writer of the participant P2 and detects a match between the writer of participant P2 and the reader of participant P1, step 132.

In response to step 132, the CDD 14 sends the discovery data of the writer of participant P2 to the participant P1, step 134, which will drop this information, step 136, because it has received this information already in step 130. The CDD 14 sends also the discovery data of the reader information of the participant P1 to the participant P2, step 138. The participant P2 receives this message with the reader information, recognizes that the reader of participant P1 matches with its writer, and stores correspondingly the discovery data for the reader of the participant P1, step 140. The participant P2 therefore has recognized that there is a reader for his writer information within the domain, and starts a communication with the reader of participant P1, step 142.

The method is performed by the microcontroller of the communications device 1 comprising the CDD 14, and the discovery information as received by the CDD 14 is stored in a non-volatile memory, e.g. a flash memory, of the communications device 1.

The participants within the domain therefore store only discovery data about an endpoint of another participant, when there is a match with one of its own endpoints. Discovery data of endpoints which do not match with one of its endpoints are dropped by the participants. A participant within the domain sends discovery data not only to other participants but also to the central discovery handler of the domain. The central discovery handler operates as a hidden participant, because it does not send and receive messages related to topics, but is configured to send and receive only discovery data of the other participants. Each time the central discovery handler receives discovery data, this information is stored and when a match between endpoints is detected, the corresponding discovery data are sent to the respective participants. Participants which are only interested in a small subset of available endpoints within the domain require therefore significantly less memory, as compared with a discovery solution storing the discovery data of all endpoints of each participant.

Also other embodiments of the invention may be utilized by one skilled in the art without departing from the scope of the present invention. For a home network, the central discovery handler is advantageously arranged within the residential gateway of the home network, but also any other communications device, e.g. a CPE device or any Internet-enabled device, may be designed to comprise a central discovery handler. The invention resides therefore in the claims herein after appended.

## Claims

1. Communications device (1) comprising one or several participants (10-13) communicating with each other and with participants (21, 31) of other devices (2, 3) of a network via endpoints, wherein
the communications device comprises a central discovery handler (14) storing discovery information of the participants (10-13, 21, 31) in a memory for providing a central discovery for the participants (10-13, 21, 31) of the network, and
when the central discovery handler (14) detects a match between an endpoint of a first participant and an endpoint of a second participant, then the central discovery handler (14) informs the first and the second participant about the match.

2. Communications device according to claim 1, wherein the central discovery handler (14) matches the discovery information of discovered endpoints of participants (10-13, 21, 31) designed for the central discovery within a domain in accordance with a Data Distribution Service for Real-Time Systems (DDS) ,and wherein the Communications device utilizes DDS for sending of discovery messages including the discovery information.

3. Communications device according to claim 1 or 2, wherein the central discovery handler (14) is adapted to send out endpoint information of one of the participants (10-13, 21, 31) in response to discovery information of a new endpoint of any participant (10-13, 21, 31).

4. Communications device according to claim 1, 2 or 3, wherein the central discovery handler (14) is adapted to send out matched endpoint information for newly defined participants (10-13, 21, 31) of the devices (1-3) that are configured to use the central discovery.

5. Communications device according to one of the preceding claims, wherein the central discovery handler (14) acts as a hidden participant responding only to discovery information, but not to messages related to topics distributed within the network.

6. Communications device according to one of the preceding claims, wherein the central discovery handler (14) stores the received discovery information of the participants (10-13, 21, 31), and when a match between any endpoints of the participants (10-13, 21, 31) is detected, the corresponding discovery information are sent to the respective participants.

7. Communications device according to one of the preceding claims, wherein the communications device is a CPE device (1), e.g. a residential gateway, arranged within a home network, and wherein the central discovery handler (14) is designed as a part of a device-specific middleware of the CPE device (1).

8. Method for providing a discovery within a network comprising a multitude of participants (10-13, 21, 31) communicating with each other via endpoints, **comprising the steps of**
storing discovery information for the participants (10-13, 21, 31) in a central discovery handler (14) for providing a central discovery for the participants (10-13) of the network,
the central discovery handler (14) detecting a match between an endpoint of a first participant and an endpoint of a second participant (132), and
the central discovery handler (14) informing the first and the second participant about the match (134, 138).

9. Method according to claim 8, wherein
the participants store only discovery information about an endpoint of another participant, when there is a match with one of its own endpoints, and
discovery information of endpoints which do not match with one of its endpoints is dropped by the participants.

10. Method according to claim 8 or 9, comprising the steps of each time the central discovery handler receives discovery information, the discovery information is stored and when a match between endpoints of participants is detected, the respective discovery information are sent to the participants operating these endpoints.

11. Method according to claim 8, 9 or 10, comprising the steps of
when the first participant (P2) creates an endpoint, the first participant sends a discovery message with discovery information of the endpoint to the other participants and the central discovery handler (14) of the network,
when the central discovery handler (14) detects a match between the endpoint of the first participant and an endpoint of a second participant (P1), then the central discovery handler (14) informs the first and the second participants about the match, so that the first participant (P2) recognizes that his endpoint matches with the endpoint of the second participant, and
starting a communication between the endpoints of the first and second participants.

12. Method according to one of the preceding claims 8-11, wherein the central discovery handler is configured to operate as a hidden participant, not sending and receiving messages related to topics, but sending and receiving only discovery information of the participants.

13. Method according to one of the preceding claims 8-12, wherein the network utilizes publish/subscribe for messaging, e.g. a Data Distribution Service for Real-Time Systems (DDS).

14. Communications device (1) comprising a microcontroller and a memory, e.g. a flash memory, for performing a method according to one of the claims 8-13.

15. A non-transitory computer-readable storage medium, on which instructions are stored for performing a method on a microcontroller according to one of the claims 8-13.
